# EUROPÄISCHE PATENTSCHRIFT

(11) **EP 1 038 273 B1**
(45) Veröffentlichungstag und Bekanntmachung des Hinweises auf die Patenterteilung: **14.11.2001**
(21) Anmeldenummer: 98966250.7
(22) Anmeldetag: 02.12.1998
(51) Int. Cl.: G07B 15/02, G07F 7/00

(54) **PARKPLATZAUTOMAT**
AUTOMATIC MACHINE FOR PARKING PLACES
APPAREIL AUTOMATIQUE POUR PARKING

(30) Priorität: 10.12.1997 PL 32361697
(43) Veröffentlichungstag der Anmeldung: 27.09.2000
(73) Patentinhaber: Krygler, Agenor, 21073 Hamburg (DE); Krygler, Alicja, 21073 Hamburg (DE)
(72) Erfinder: Krygler, Agenor, 21073 Hamburg (DE); Krygler, Alicja, 21073 Hamburg (DE)
(74) Vertreter: Richter, Joachim, Dipl.-Ing.
(86) Internationale Anmeldenummer: EP9807814
(87) Internationale Veröffentlichungsnummer: WO9930282

(56) Entgegenhaltungen:
- EP-A- 0 275 210
- EP-A- 0 783 161
- DE-A- 4 304 911
- DE-U- 29 621 088
- FR-A- 2 523 337
- US-A- 4 173 272
- US-A- 4 532 418

## Beschreibung

### Technisches Gebiet

Die Erfindung betrifft einen Parkplatzautomaten gemäß dem Oberbegriff des Anspruchs 1.

### Stand der Technik

Insbesondere in verkehrsreichen Innenstädten ist häufig der anbietbare Parkraum eingeschränkt. Um einem Dauerparken entgegenzuwirken, werden nach dem Stand der Technik sogenannte Parkuhren eingesetzt, die einen Münz-Einwurfschlitz besitzen, in den je nach gewünschter Parkdauer und notwendiger Parkgebühr unterschiedliche Münzen einwerfbar sind. Durch Betätigung eines an der Parkuhr vorhandenen Drehknopfes schaltet die Parkuhr die gewählte und bezahlte Parkzeit frei. Eine mit einer Uhr verbundene Drehplatte rotiert mit ablaufender Zeit auf eine "0-Marke" zurück, die den Ablauf der bezahlten Parkdauer anzeigt. Der Nachteil dieser Parkuhren besteht in der recht aufwendigen benötigten Mechanik, die zudem noch verschleißanfällig ist. Auch wenn solche Parkuhren als Doppelparkuhren für zwei Parkplätze ausgebildet sind, wird letztendlich pro Parkplatz eine entsprechende zeitsynchron laufende Mechanik benötigt.

In vielen Städten und Gemeinden werden neben Parkuhren auch Parkscheinautomaten eingesetzt, die nach Einwurf eines bestimmten Geldbetrages und Wahl der gewünschten Parkdauer ein Druckwerk in Betrieb setzen, das sich aus der gezahlten Gebühr ergebende Parkdauer als Endparkzeit ausgibt. Der Parkplatzbenutzer ist bei diesem System angewiesen, den gelösten Parkschein sichtbar im Kraftfahrzeuginneren anzuordnen, um Kontrollen, ob die Parkzeit überschritten ist, zu ermöglichen. Dieses Verfahren ist nicht nur für den Parkplatzbenutzer recht umständlich, da er sowohl den Hin- wie auch den Rückweg vom Fahrzeug zum Parkscheinautomaten zurücklegen muß, bevor er das Fahrzeug abschließen und den Parkort verlassen kann. Hinzu komm, daß die Parkscheine beim Einlegen in das Fahrzeug durch äußere Luftbewegungen oder schon durch das Zuschlagen der Tür vom Armaturenbrett, wo sie regelmäßig abgelegt werden sollen, abgeweht werden und zur Kontrolle unkenntlich am Fahrzeugboden liegen. Die Parkscheinautomaten sind auch aufwendig, da sie über ein elektrisch gesteuertes Druckwerk verfügen müssen.

Ein Parkplatzautomat mit den Merkmalen des Oberbegriffs des Anspruches 1 ist aus der DE 296 21 088 U bekannt. Dieser Parkplatzautomat ist mit einer Eingabevorrichtung für Zahlungsmittel, insbesondere mit einer Münzeinwurfeinrichtung und einer Anzeigevorrichtung zur Anzeige des Ablaufens einer bezahlten Parkzeit versehen. Dabei weist die Anzeigevorrichtung wenigstens zwei optische oder akustische Anzeigemittel für eine entsprechende Anzahl von Parkplätzen auf, wobei ein Betätigungsmittel mit dem ihm zugeordneten Anzeigemittel in Wirkverbindung steht und wobei ferner alle Anzeigemittel, das Betätigungsmittel und die Eingabevorrichtung für Zahlungsmittel mit einer gemeinsamen Steuereinrichtung verbunden sind. Die ausgewählte und eingespeicherte Parkzeit wird akustisch bestätigt. Für diese akustische Bestätigung ist ein Tonwiedergabegerät vorgesehen, während die Anzeigemittel als optische beispielsweise in Form von Leuchtdioden, oder als akustische Einrichtungen ausgebildet sein können, wobei jedem Betätigungsmittel ein Anzeigemittel zugeordnet ist. Blinkt zu der Taste mit einer bestimmten dieser zugeordneten Zahl, wird die Kontrollperson davon in Kenntnis gesetzt, daß die Gebühr für den die gleiche Zahl tragenden Parkplatz bezahlt ist und daß die Parkzeit noch nicht abgelaufen ist. Dieses Blinklicht ist lange in Tätigkeit, solange die Parkzeit läuft. Somit ist das jedem Betätigungsmittel zugeordnete Anzeigemittel so ausgebildet, daß zwei verschiedene, von einer Kontrollperson ablesbare Zustände signalisiert werden, nämlich bei blinkendem Zustand, daß die bezahlte Parkzeit noch läuft und bei Beendigung der blinkenden Funktion, daß die bezahlte Parkzeit abgelaufen ist. Ein dritter Zustand, daß die bezahlte Parkzeit länger als eine vorbestimmte Zeit abgelaufen ist, wird der Kontrollperson nichts signalisiert und wird auch nicht angezeigt. Des weiteren ist bei diesem Parkplatzautomaten die Eingabevorrichtung für Zahlungsmittel nicht als eine Chip-Karten-Betätigungseinrichtung für Chipkarten als Parkkarten mit einer Anzahl von gespeicherten, für die die jeweils gewünschte Parkdauer abbuchbaren Parkeinheiten ausgebildet. Der Parkplatzautomat ist vielmehr ausschließlich für Münzen als Zahlungsmittel ausgelegt.

Der Parkplatzautomat nach der FR-A-25 23 337 ist so ausgebildet, daß er nach außen wenigstens drei, d.h. von einer Kontrollperson ablesbare Zustände signalisiert, nämlich "bezahlte Parkzeit läuft" als erster Zustand, "bezahlte Parkzeit abgelaufen" als zweiter Zustand und "bezahlte länger als eine vorbestimmte Zeit abgelaufen" als dritter Zustand, wobei die drei Zustände über Farbdioden angezeigt werden. Alle drei Anzeigezustände können somit von Kontrollpersonal überwacht werden. Aber auch dieser Parkplatzautomat ist nicht ausgelegt für Chipkarten als Zahlungsmittel für die jeweils gewünschte Parkdauer.

Der Parkplatzautomat nach der EP-A-0 275 210 läßt sich mit einer als Parkkarte ausgebildeten Chipkarte betreiben. Diese ist in den Automaten einzuführen; die auf der Karte verbleibende Parkzeit wird angezeigt. Nach Betätigung eines Startschalters am Parkautomaten wird das Kartenguthaben um eine Einheit reduziert und in den Automaten als Parkdauer übertragen. Eine eine Parkeinheit übersteigende Parkdauer ist möglich, indem die vorstehende Eingabe-Operation wiederholt wird.

Aus der DE 296 06 229 U ist es ferner bekannt, an einem Parkscheinautomaten für jeden Parkplatz ein Zusatzgehäuse mit Sichtfenster zum Einwurf eines Parkscheines vorzusehen.

### Darstellung der Erfindung, Aufgabe, Lösung, Vorteile

Es ist Aufgabe der vorliegenden Erfindung, einen verbesserten Parkautomaten der obengenannten Art zur Verfügung zu stellen, welcher die obengenannten Nachteile beseitigt und noch einfacher zu handhaben und für eine Kontrollperson ablesbar ist, wobei auch das Ende einer tolerierten Parkzeitüberschreitung angezeigt wird.

Diese Aufgabe wird durch einen Parkplatzautomat der o. g. Art mit den in Anspruch 1 gekennzeichneten Merkmalen gelöst.

Hiernach besteht die Erfindung darin, daß das jedem Betätigungsmittel zugeordnete Anzeigemittel darüber hinaus so ausgebildet ist, daß ein dritter von einer Kontrollperson ablesbarer Zustand dargestellt wird, der der Kontrollperson "bezahlte Parkzeit länger als eine vorbestimmte Zeit abgelaufen" signalisiert und wenigstens eine Leuchtdiode umfaßt, die die drei Zustände mittels wenigstens zwei, insbesondere drei, unterschiedliche Leuchtfarben und/oder mittels unterschiedlich intermettierendem bzw. konstantem Aufleuchten darstellt, wobei die Eingabevorrichtung für Zahlungsmittel als eine Chip-Karten-Betätigungseinrichtung für Chip-Karten als Parkkarten mit einer Anzahl von gespeicherten, für die jeweils gewünschte Parkdauer abbuchbaren Parkeinheiten ausgebildet ist. Die Steuervorrichtung ist derart ausgebildet, daß diese bei jedem Einstecken der Chipkarte in die Chip-Karten-Betätigungseinrichtung eine vorbestimmte Einheit von der Chip-Karte abbucht und entsprechend aufsummiert und eine der aufsummierten Einheiten entsprechende Parkzeit akustisch über das Tonwiedergabegerät ausgibt, wobei nach einer vorbestimmten Anzahl von Einsteckvorgängen der Chip-Karte keine weiteren Abbuchungen einer vorbestimmten Einheit erfolgt bzw. die Chip-Karten-Betätigungseinrichtung ist dann für weitere Einsteckvorgänge der Chip-Karte gesperrt.

Dies hat den Vorteil, daß für eine Kontrollperson auf einfache und schnelle Weise für eine Mehrzahl von Parkplätzen zentral an einem Ort überprüfbar ist, ob die jeweiligen Parkplatzbenutzer die von ihnen in Anspruch genommene Stellzeit bezahlt haben oder entsprechende Maßnahmen zum Entfernen eines unberechtigten Parkplatzbenutzers zu ergreifen sind.

Vorteilhaft ist auch, daß zur einfachen Bedienbarkeit des Parkplatzautomaten durch einen Fahrer eines auf einem dem Parkplatzautomaten zugeordneten Parkplatz die Steuervorrichtung derart ausgebildet ist, daß diese bei jedem Einstecken einer Chipkarte in die Chip-Karten-Betätigungseinrichtung eine vorbestimmte Einheit von der Chip-Karte abbucht und entsprechend aufsummiert und eine der aufsummierten Einheiten entsprechende Parkzeit akustisch über das Tonwiedergabegerät ausgibt. Hierbei entspricht die vorbestimmte Einheit beispielsweise einer Parkzeit von 30 Minuten.

Zum Festlegen einer maximalen Parkdauer arbeitet die Steuervorrichtung derart, daß nach einer vorbestimmten Anzahl von Einsteckvorgängen der Chip-Karte keine weitere Abbuchung einer vorbestimmten Einheit erfolgt bzw. die Chip-Karten-Betätigungseinrichtung für weitere Einsteckvorgänge der Chip-Karte gesperrt ist.

Die Anzeigevorrichtung umfaßt wenigstens eine Leuchtdiode, welche die drei Zustände mittels wenigstens jedoch bevorzugterweise zwei, jedoch auch drei mit unterschiedlichen Leuchtfarben und/oder mittels unterschiedlich intermittierendem bzw. konstantem Aufleuchten darstellt. Beispielsweise ist eine Leuchtdiode vorgesehen, wobei ein intermittierendes Aufleuchten mit einer ersten vorbestimmten Frequenz oder einem ersten vorbestimmten Intervallmuster den ersten Zustand, ein intermittierendes Aufleuchten mit einer zweiten vorbestimmten Frequenz oder einem zweiten vorbestimmten Intervallmuster den zweiten Zustand und gegebenenfalls ein intermittierendes Aufleuchten mit einer dritten vorbestimmten Frequenz oder einem dritten vorbestimmten Intervallmuster den dritten Zustand signalisiert, wobei insbesondere eine der vorbestimmten Frequenzen unendlich ist und einem kontinuierlichen Aufleuchten entspricht.

Vorteilhafte Ausgestaltungen der Erfindung sind in den Unteransprüchen gekennzeichnet.

Bevorzugterweise sind zwei Leuchtdioden unterschiedlicher Farbe vorgesehen, wobei ein Aufleuchten der Leuchtdiode mit einer ersten Farbe, z.B. grün, den ersten Zustand, ein Aufleuchten der anderen Leuchtdiode mit einer zweiten Farbe, z.B. rot, den zweiten Zustand und den dritten Zustand durch abwechselndes Blinken der beiden Leuchtdioden mit einer vorbestimmten Frequenz oder einem vorbestimmten Intervallmuster signalisiert.

In einer weiteren Ausführungsform sind drei Leuchtdioden mit unterschiedlichen Farben vorgesehen, wobei eine Leuchtdiode mit der Farbe Grün den ersten Zustand, eine Leuchtdiode mit der Farbe Rot den zweiten Zustand und eine Leuchtdiode mit der Farbe Gelb den dritten Zustand durch Dauerlicht, d.h. durch kontinuierliches Aufleuchten und/oder intermittierendes Leuchten signalisiert.

Auch das Erlöschen der leuchtenden oder blinkenden Leuchtdioden kann als Signal für den Ablauf der Parkzeit herangezogen werden.

Beispielsweise beträgt die "vorbestimmte Zeit" des dritten Zustandes eine Stunde, so dass ab einer Stunde nach Ablauf der bezahlten Parkzeit ein Entfernen des nunmehr unberechtigt einen Parkplatz belegenden Kraftfahrzeuges eingeleitet werden kann.

Zur einfachen und übersichtlichen Bedienbarkeit durch einen Kraftfahrer und Ablesbakeit durch eine Kontrollperson, ohne auf den Parkplätzen selbst, beispielsweise am Boden, zusätzliche Markierungen anbringen zu müssen, weist der Parkplatzautomat einen Grundrissplan der diesem Parkplatzautomaten zugeordneten Parkplätze auf, wobei die Betätigungsmittel und Anzeigevorrichtungen in dem Grundrißplan derart angeordnet bzw. bezeichnet sind, dass in eindeutiger Weise jedem Parkplatz des Grundrissplans ein Betätigungsmittel und eine Anzeigevorrichtung zugeordnet ist. Hierbei ergibt sich die Zuordnung der auf dem Grundrissplan eingezeichneten Parkplätze zu realen Parkplätzen durch die zwar maßstablich unterschiedlich aber geometrische übereinstimmende Darstellung zwischen Grundrissplan und der realen Parkplatzanordnung. Zusätzliche zuordnende Kennzeichnungen sind dadurch nicht erforderlich.

Eine einfache Zuordnung von Betätigungselementen und Anzeigevorrichtungen auf dem Parkplatzautomaten zu entsprechenden Parkplätzen auf dem Grundrissplan erzielt man dadurch, dass jedem Parkplatz in dem Grundrissplan auf dem Parkplatzautomaten ein Symbol, insbesondere eine Ziffer, zugeordnet ist, wobei jedem Betätigungsmittel und jeder Anzeigevorrichtung dasselbe Symbol, insbesondere dieselbe Ziffer, wie dem zugehörigen Parkplatz zugeordnet ist.

### Kurze Beschreibung der Zeichnungen

Nachstehend wird die Erfindung anhand der beigefügten Zeichnungen näher erläutert. Diese zeigen in
- Fig. 1: eine schaubildliche Aufsicht einer bevorzugten Ausführungsform eines Parkplatzautomaten und
- Fig. 2: ein schematisches Blockschaltbild eines Aufbaus der Parkplatzautomaten gemäß Fig. 1.

### Bester Weg zur Ausführung der Erfindung

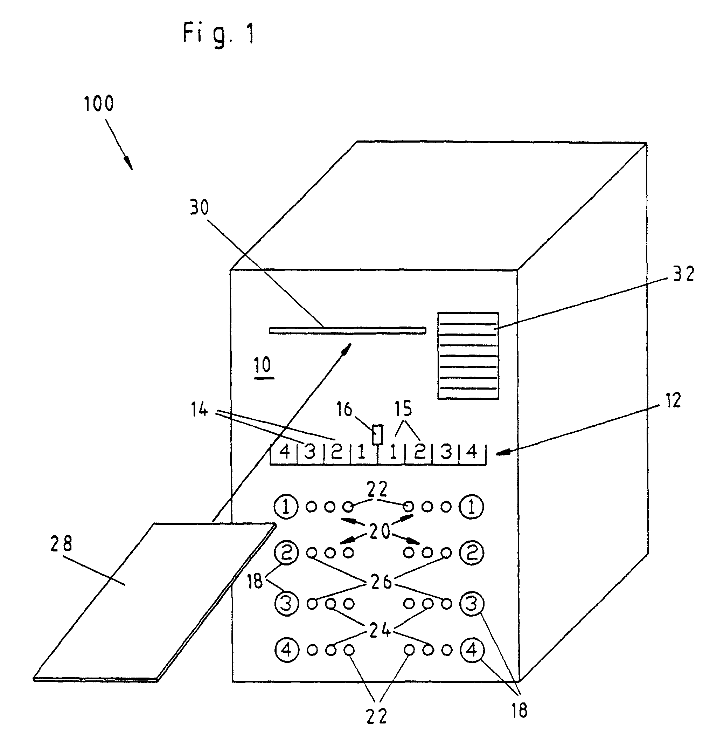

Die in Figur 1 dargestellte bevorzugte Ausführungsform eines erfindungsgemäßen Parkplatzautomaten 100 umfasst eine Frontplatte 10, auf der ein Grundrissplan 12 von diesem Parkplatzautomaten 100 zugeordneten Parkplätzen angeordnet ist. Jeder Parkplatz 14 des Grundrissplans 12 ist mit einer Ziffer versehen, wobei ein Symbol 16 den Standort des Parkplatzautomaten 100 in dem Grundrissplan veranschaulicht. Die rechts und links vom erfindungsgemäßen Parkplatzautomaten 100 liegenden Parkplätze 14 bzw. 15 sind jeweils mit den Ziffern "1" bis "4" durchnumeriert. Jedem Parkplatz 14, 15 ist ein jeweiliges Betätigungsmittel 18 und eine jeweilige Anzeigevorrichtung 20 mittels entsprechender Ziffern "1" bis "4" für jeweils die Parkplätze 15 rechts vom Parkplatzautomaten 100 und die Parkplätze 14 links vom Parkplatzautomaten 100 eindeutig zugeordnet. Die Anzahl der Parkplätze 14, 15 links und rechts vom erfindungsgemäßen Parkplatzautomaten 100 ist beliebig wählbar und beträgt hier nur beispielhaft jeweils vier.

Jede der Anzeigevorrichtungen 20 umfaßt nach einer ersten Ausführungsform zwei Leuchtdioden 24, 26, wobei die jeweils erste Leuchtdiode 26 mit grüner Farbe leuchtet als Bestätigung dafür, daß die Parkzeit bezahlt ist, wemm die zweite Leuchtdiode 24 mit roter Farbe leuchtet, wird angezeigt, daß die bezahlte Parkdauer abgelaufen ist. Nach Ablauf dieser ersten roten Zeitphase wird für eine vorgegebene weitere Zeitphase rotes Blinklicht ausgestrahlt als Zeichen für die Kontrollperson dafür, daß die Parkablaufzeit längst abgelaufen ist, so daß mit dieser letzten Zeitphase die Aufforderung an die Kontrollperson geht, daß wegen Überschreiten der Parkzeitdauer der Wagen abgeschleppt werden kann.

Bei einer weiteren Ausführungsform umfaßt jede der Anzeigevorrichtungen 20 drei Leuchtdioden 22, 24 und 26, wobei eine jeweilige erste Leuchtdiode 22 mit gelber Farbe, eine jeweilige zweite Leuchtdiode 24 mit roter Farbe und eine jeweilige dritte Leuchtdiode 26 mit grüner Farbe aufleuchtet. Wie auch im Fall der ersten Ausführungsform mit zwei Leuchtdioden ist für den Einsteckvorgang einer Chip-Karte ist ein Einschubschlitz 30 vorgesehen. Über einen Lautsprecher 32a erfolgen in nachfolgend beschriebener Weise akustische Ansagen für einen Parkplatzbenutzer.

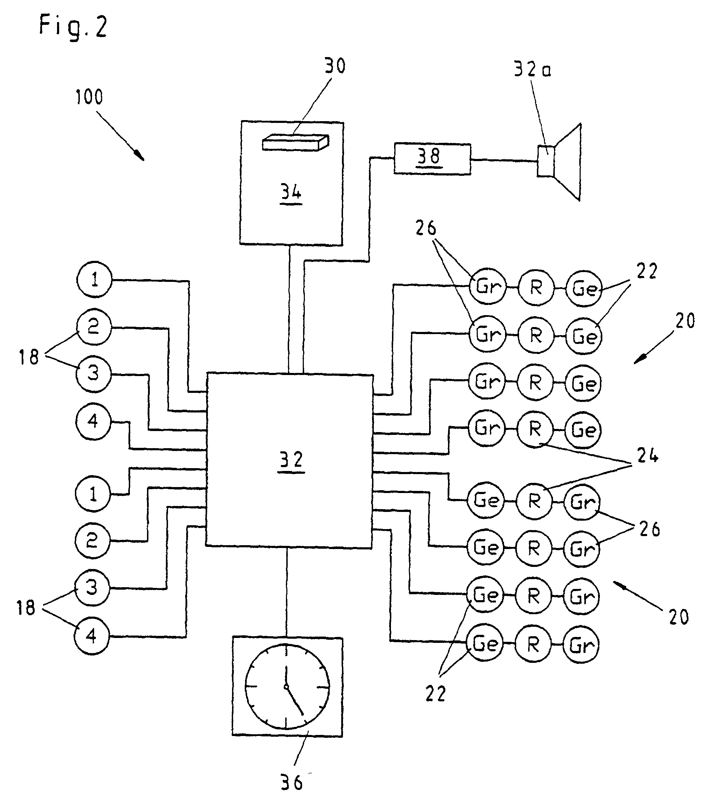

Fig. 2 zeigt ein schematisches Blockschaltbild des Parkplatzautomaten von Fig. 1 für eine Ausführungsform mit drei Leuchtdioden, wobei gleiche Teile mit gleichen Bezugsziffern bezeichnet sind, so dass zu deren Erläuterung auf obige Beschreibung der Fig. 1 verwiesen wird. Das Blockschaltbild für eine Ausführungsform mit zwei Leuchtdioden ist entsprechend ausgebildet. Lediglich die Funktion der ersten Leuchtdiode 22 mit gelbem Farblicht ist in die Leuchtdiode 24 mit dem roten Farblicht integriert, und zwar derart, daß in einer ersten gesteuerten Zeitphase die Diode 24 rotes Dauerlicht und in einer zweiten gesteuerten Zeitphase rotes Blinklicht ausstrahlt. Die gelben Leuchtdioden 22 sind mit zusätzlich mit "Ge", die roten Leuchtdioden 24 sind zusätzlich mit "R" und die grünen Leuchtdioden 26 sind zusätzlich mit "Gr" gekennzeichnet. Die Leuchtdioden 22, 24, 26 der Anzeigevorrichtungen 20 und die Betätigungsmittel 18 sind mit einer Steuereinrichtung 32 verbunden, welche Betätigungen der Betätigungsmittel 18 registriert und die Leuchtdioden 22, 24, 26 der Anzeigevorrichtungen 20 in nachfolgend näher beschriebenen Weise zeitabhängig ansteuert.

Ferner ist eine Chip-Karten-Betätigungseinrichtung 34 mit Einschubschlitz 30, ein Tonwiedergabegerät 38 mit Lautsprecher 32a und ein Uhrmodul 36 mit der Steuereinrichtung 32 verbunden. Das Uhrmodul 18 dient als Zeitgeber für die Steuereinrichtung 32, welche zeitgesteuert die Leuchtdioden 22, 24, 26 der Anzeigevorrichtungen 20 und ggf. das Tonwiedergabegerät ansteuert. Die Steuereinrichtung 32 ist beispielsweise eine Mikroprozessor-Einheit und bevorzugt über einen Datenbus mit den übrigen Komponenten 18, 20, 34, 36 und 38 verbunden.

Der Parkplatzautomat 100 wird beispielsweise mittels Scheck- oder anderen Chip-Karten, analog Telefonkarten, bedient, wobei die Chip-Karten beispielsweise als Parkkarten an Tankstellen oder Kiosken erhältlich sind. Eine Chip- bzw. Parkkarte enthält beispielsweise 500 Einheiten, wobei eine Einheit einer vorbestimmten Parkdauer von beispielsweise 30 Minuten entspricht.

Nachfolgend wird ein beispielhafter Ablauf einer Betätigung des Parkplatzautomaten 100 und ein Ablesen durch eine Kontrollperson bei einer Ausführungsform mit drei Leuchtdioden 22, 24, 26 beschreiben.

Die Parkkarte 28 mit beispielsweise 500 Parkeinheiten wird in den Einschubschlitz 30 eingeschoben. Bei diesem ersten Einschieben wird von der Parkkarte 28 eine Einheit für eine Parkdauer von ½ Stunde durch die Steuereinrichtung 32 abgebucht und die Karte wieder herausgezogen bzw. ausgegeben. Wird eine längerer Parkdauer gewünscht, so wird die Karte erneut eingeschoben, eine weitere Einheit durch die Steuereinrichtung 32 abgebucht und die Karte wieder herausgezogen bzw. ausgegeben, wobei die Parkzeit auf 1 Stunde, 1½ Stunden, 2 Stunden usw. aufsummiert wird, je nach Anzahl der Einschub- bzw. Einsteckvorgänge der Park- bzw. Chip-Karte. Zweckmäßiger ist eine Höchstparkdauer von beispielsweise 2 Stunden vorgegeben, so dass nach vier Einsteckvorgängen die Steuereinrichtung 32 keine Einheit mehr abbucht bzw. den Einschubschlitz 30 der Chip-Karten-Betätigungseinrichtung 34 sperrt.

Jedesmal, wenn die Parkkarte aus dem Einschubschlitz 30 herausgezogen bzw. ausgeworfen wird, steuert die Steuereinrichtung 32 das Tonwiedergabegerät 38 derart an, dass dieses über den Lautsprecher 32a akustisch eine aktuell aufsummierte Parkdauer ansagt, also nach dem ersten Einsteckvorgang beispielsweise "dreißig Minuten bezahlt", nach dem zweiten Einsteckvorgang beispielsweise "sechzig Minuten bezahlt", nach dem dritten Einsteckvorgang beispielsweise "neunzig Minuten bezahlt" usw. Optional zeigt der erfindungsgemäße Parkplatzautomat 100 beim Einschieben und/oder Herausziehen bzw. Auswerfen der Chip-Karte optisch oder akustisch an, wieviel Einheiten sich noch auf dieser befinden bzw. gespeichert sind.

Die Anzahl der Betätigungsmittel 18 entspricht der Anzahl der dem Parkplatzautomaten 100 zugeordneten Parkplätze 14, 15. Sobald eine gewünschte Parkdauer in Form von Einheiten von der Chip-Karte abgebucht und der Parkplatzbenutzer vom erfindungsgemäßen Parkplatzautomaten 100 akustisch über die abgebuchte Parkdauer beispielsweise mit einem "Danke" unterrichtet worden ist, betätigt der Parkplatzbenutzer dasjenige Betätigungsmittel 18, welches demjenigen Parkplatz entspricht, auf dem der Parkplatzbenutzer sein Kraftfahrzeug abgestellt hat. Für den Parkplatz "3" der rechts vom Parkplatzautomaten 100 angeordneten realen Parkplätze 15 ist beispielsweise das Betätigungsmittel "3" der rechten Reihe der Betätigungsmittel 18 zu drücken (vgl. Fig. 1). Der gleiche vorangehend beschriebene Ablauf ist auch bei einer Ausführungsform mit zwei Leuchtdioden 24, 26 gegeben.

Daraufhin steuert die Steuereinrichtung 32 die diesem Parkplatz zugeordnete Anzeigevorrichtung 20 mit den Leuchtdioden 22, 24 und 26 oder mit den Leuchtdioden 24, 26 derart an, dass bis zum Ablauf der bezahlten Parkzeit immer die grüne Leuchtdiode 26 leuchtet. Nach Ablauf der bezahlten Parkzeit, also beispielsweise nach einer Stunde, erlischt die grüne Leuchtdiode 26 und die Steuereinrichtung 32 lässt die rote Leuchtdiode 24 aufleuchten. Dies signalisiert einer Kontrollperson, welche eine ordnungsgemäße Bezahlung der Parkplatzbenutzung überwacht, dass die bezahlte Parkzeit für diesen Parkplatz abgelaufen ist. Nach einer weiteren vorbestimmten Zeit, von beispielsweise einer weiteren Stunde, lässt die Steuereinrichtung 32 bei einer Ausführungsform mit zwei Leuchtdioden 24, 26 die rote Leuchtdiode 24 blinkend aufleuchten und bei der Ausführungsform mit drei Leuchtdioden 22, 24, 26 die gelbe Leuchtdiode 22 kontinuierlich oder blinkend aufleuchten. Dies signalisiert der Kontrollperson, dass die bezahlte Parkzeit um mehr als die vorbestimmte Zeit, also hier um mehr als eine Stunde, überschritten ist, sofern sich das Kraftfahrzeug des Parkplatzbenutzers noch auf diesem Parkplatz befindet. In diesem Fall kann die Kontrollperson ein Entfernen des nunmehr unberechtigt abgestellten Kraftfahrzeuges, beispielsweise durch abschleppen, veranlassen.

Zusammenfassend signalisiert also ein Aufleuchten der grünen Leuchtdiode 26, dass die bezahlte Parkzeit noch läuft, ein Aufleuchten der roten Leuchtdiode 24, dass die Parkzeit abgelaufen ist und eine Karenzzeit von beispielsweise einer Stunde läuft und ein Aufleuchten der gelben Leuchtdiode 22 oder ein Blinken der roten Leuchtdiode 24, dass die Parkzeit um mehr als die Karenzzeit von beispielsweise einer Stunde überschritten ist und das auf dem zugehörigen Parkplatz 14, 15 abgestellte Kraftfahrzeug abzuschleppen ist. Es werden somit drei verschiedenen Zustände zeitgesteuert angezeigt.

In der alternativen Ausführungsform sind nur zwei Leuchtdioden unterschiedlicher Farbe, beispielsweise nur die rote Leuchtdiode 24 und die grüne Leuchtdiode 26, vorgesehen. Während der Parkzeit leuchtet die grüne Leuchtdiode 26 kontinuierlich, während der Karenzzeit blinkt die rote Leuchtdiode 24 und nach Ablauf der Karenzzeit leuchtet die rote Leuchtdiode 24 kontinuierlich oder auch eine umgekehrte Blinkfolge von Dauerlicht und Blinklicht ist möglich. Dies ist alternativ mit nur einer Leuchtdiode realisiert, welche je nach angelegter Spannung sowohl grün als auch rot aufleuchten kann.

Bei einer Ausführungsform mit nur einer einzigen Leuchtdiode sind alle Dauerlicht- und Blinklichtstufen in einer Leuchtdiode vereinigt. Während der Laufzeit der Parkdauer sendet dann diese Leuchtdiode grünes Blinklicht aus. Ist die Parkzeit abgelaufen, dann wird über die gleiche Leuchtdiode rotes Blinklicht ausgestrahlt. Ist die Blinklichtperiode abgelaufen, dann kann sich eine kurze Periode, z.B. von 15 Minuten, mit rotem Dauerlicht anschließen. Die Steuerung der einzelnen Licht- und Zeitperioden erfolgt ebenfalls über die Steuervorrichtung 32.

Das von den Lichtdioden ausgestrahlte Licht kann in Form von Blinklicht, was wirtschaftlicher ist, oder von Dauerlicht oder wechselweise von Blink- und Dauerlicht ausgesandt werden. Wesentlich ist, daß die laufende Parkzeit, die abgelaufene Parkzeit und eine zusätzliche Zeit optisch so angezeigt werden, daß die einzelnen Zustände sowohl vom Parkplatznehmer als auch von der Kontrollperson erkennbar ist.

## Patentansprüche

1. Parkplatzautomat (100) mit einer Eingabevorrichtung (34) für Zahlungsmittel und wenigstens einer Anzeigevorrichtung (20) zur Anzeige des Ablaufs einer bezahlten Parkzeit, wobei die Anzeigevorrichtung (20) wenigstens ein optisches Anzeigemittel jeweils für eine entsprechende Anzahl von Parkplätzen aufweist, wobei je ein Betätigungsmittel (18) mit einem Anzeigemittel (20) einem Parkplatz zugeordnet ist, wobei ferner alle Anzeigemittel (20), die Betätigungsmittel (18) und die Eingabevorrichtung (34) für Zahlungsmittel mit einer gemeinsamen Steuereinrichtung (32) verbunden sind, wobei ferner ein Tonwiedergabegerät (32a, 38) mit einer akustischen Ansage über die bezahlte Parkzeit vorgesehen und die Eingabevorrichtung (34) für Zahlungsmittel ausgebildet ist, wobei das jedem Betätigungsmittel (18) zugeordnete Anzeigemittel (20) derart ausgebildet ist, daß dieses zwei verschiedene von einer Kontrollperson ablesbare oder erkennbare Zustände signalisiert, wie "bezahlte Parkzeit läuft" (erster Zustand) und "bezahlte Parkzeit abgelaufen" (zweiter Zustand),
**dadurch gekennzeichnet,**
**dass** das jedem Betätigungsmittel (18) zugeordnete Anzeigemittel (20) darüber hinaus so ausgebildet ist, daß ein dritter von einer Kontrollperson ablesbarer Zustand dargestellt wird, der der Kontrollperson "bezahlte Parkzeit länger als eine vorbestimmte Zeit abgelaufen" signalisiert, und wenigstens eine Leuchtdiode (22, 24, 26) umfaßt, die die drei Zustände mittels wenigstens zwei, insbesondere drei, unterschiedliche Leuchtfarben und/oder mittels unterschiedlich intermittierendem bzw. konstanten Aufleuchten darstellt, daß die Eingabevorrichtung (34) für Zahlungsmittel als eine Chip-Karten-Betätigungseinrichtung (30, 34) für Chip-Karten (28) als Parkkarten mit einer Anzahl von gespeicherten, für die jeweils gewünschte Parkdauer abbuchbaren Parkeinheiten ausgebildet ist und daß die Steuervorrichtung (32) derart ausgebildet ist, daß diese bei jedem Einstecken der Chipkarte (28) in die Chip-Karten-Betätigungseinrichtung (30, 34) eine vorbestimmte Einheit von der Chip-Karte (28) abbucht und entsprechend aufsummiert und eine der aufsummierten Einheiten entsprechende Parkzeit akustisch über das Tonwiedergabegerät (32a, 38) ausgibt und daß nach einer vorbestimmten Anzahl von Einsteckvorgängen der Chip-Karte (28) keine weiteren Abbuchungen einer vorbestimmten Einheit erfolgt bzw. die Chip-Karten-Betätigungseinrichtung (30, 34) für weitere Einsteckvorgänge der Chip-Karte (28) gesperrt ist.

2. Parkplatzautomat (100) nach Anspruch 1,
**dadurch gekennzeichnet,**
**dass** die vorbestimmte Einheit einer Parkzeit von 30 Minuten entspricht.

3. Parkplatzautomat (100) nach einem der Ansprüche 1 oder 2,
**dadurch gekennzeichnet,**
**dass** die Steuervorrichtung (32) derart ausgebildet ist, dass diese nach Betätigen eines Betätigungsmittels (18) eine zuvor aufgrund von Einsteckvorgängen der Chip-Karte (28) aufsummierte Parkzeit dem diesem Betätigungsmittel (18) zugeordneten Parkplatz (14, 15) zuweist und die diesem Betätigungsmittel (18) zugeordnete Anzeigevorrichtung (20) zeitabhängig entsprechend der zugeordneten Parkzeit ansteuert.

4. Parkplatzautomat (100) nach einem der Ansprüche 1 bis 3,
**dadurch gekennzeichnet,**
**dass** eine Leuchtdiode (22, 24, 26) vorgesehen ist, wobei ein intermittierendes Aufleuchten mit einer ersten vorbestimmten Frequenz oder einem ersten vorbestimmten Intervallmuster den ersten Zustand, ein intermittierendes Aufleuchten mit einer zweiten vorbestimmten Frequenz oder einem zweiten vorbestimmten Intervallmuster den zweiten Zustand und ein intermittierendes Aufleuchten mit einer dritten vorbestimmten Frequenz oder einem dritten vorbestimmten Intervallmuster den dritten Zustand signalisiert.

5. Parkplatzautomat (100) nach Anspruch 4,
**dadurch gekennzeichnet,**
**dass** eine der vorbestimmten Frequenzen unendlich ist und einem kontinuierlichen Aufleuchten entspricht.

6. Parkplatzautomat (100) nach einem der Ansprüche 1 bis 5,
**dadurch gekennzeichnet,**
**dass** zwei Leuchtdioden (22, 24, 26) unterschiedlicher Farbe vorgesehen sind, wobei ein kontinuierliches Aufleuchten der Leuchtdiode mit einer ersten Farbe den ersten Zustand, ein kontinuierliches Aufleuchten der anderen Leuchtdiode mit einer zweiten Farbe den zweiten Zustand oder den dritten Zustand und ein intermittierendes Aufleuchten einer der beiden Leuchtdioden mit einer vorbestimmten Frequenz oder einem vorbestimmten Intervallmuster den dritten Zustand oder den zweiten Zustand signalisiert.

7. Parkplatzautomat (100) nach einem der Ansprüche 1 bis 5,
**dadurch gekennzeichnet,**
**dass** drei Leuchtdioden (22, 24, 26) mit unterschiedlichen Farben vorgesehen sind, wobei eine Leuchtdiode (26) mit der Farbe Grün den ersten Zustand, eine Leuchtdiode (24) mit der Farbe Rot den zweiten Zustand und eine Leuchtdiode (22) mit der Farbe Gelb den dritten Zustand signalisiert.

8. Parkplatzautomat (100) nach einem der vorhergehenden Ansprüche 1 bis 7,
**dadurch gekennzeichnet,**
**dass** die "vorbestimmte Zeit" des dritten Zustandes eine Stunde beträgt.

9. Parkplatzautomat (100) nach einem der vorhergehenden Ansprüche 1 bis 8,
**dadurch gekennzeichnet,**
**dass** dieser einen Grundrissplan (12) der diesem Parkplatzautomaten (100) zugeordneten Parkplätze (14, 15) auf-weist, wobei die Betätigungsmittel (18) und Anzeigevorrichtungen (20) in dem Grundrißplan derart angeordnet bzw. bezeichnet sind, dass in eindeutiger Weise jedem Parkplatz des Grundrissplans eine Betätigungsmittel und eine Anzeigevorrichtung zugeordnet ist.

10. Parkplatzautomat (100) nach Anspruch 9,
**dadurch gekennzeichnet,**
**dass** jedem Parkplatz (14, 15) in dem Grundrissplan (12) auf dem Parkplatzautomaten (100) ein Symbol, insbesondere eine Ziffer, zugeordnet ist, wobei jedem Betätigungsmittel (18) und jeder Anzeigevorrichtung (20) dasselbe Symbol, insbesondere dieselbe Ziffer, wie dem zugehörigen Parkplatz (14, 15) zugeordnet ist.

## Claims

1. A parking meter (100) with an input device (34) for paying means and at least one indicating device (20) for indicating the expiration of a paid parking time, the indicating device (20) having at least one optical indicating means respectively for a corresponding number of parking spaces, respectively one actuating means (18) with an indicating means (20) being allocated to one parking space, whereby furthermore all indicating means (20), the actuating means (18) and the input device (34) for payment means are connected with a common control device (32), whereby furthermore a sound reproduction apparatus (32a, 38) with an acoustical announcement about the paid parking time is provided and the input device (34) for paying means is formed, the indicating means (20) allocated to each actuating means (18) being constituted in such a way that this indicating means indicates two different conditions which can be read or recognized by a control person such as "paid parking time running" (first condition) and "paid parking time expired" (second condition),
**characterized in**
**that** the indicating means (20) allocated to each actuating means (18) is furthermore constituted in such a way that a third condition which can be read by a control person is represented which indicates to the control person "paid parking time expired for a longer time than a predetermined time" and comprises at least one light diode (22, 24, 26) which represents the three conditions by means of at least two, especially three, different luminous colours and/or by means of different intermittent or constant flashing, that the input device (34) for payment means is formed as a chip card actuating device (30, 34) for chip cards (28) as parking cards with a number of stored parking units which can be debited for the respectively desired parking time and that the control device (32) is formed in such a way that it debits a predetermined unit from the chip card (28) at each insertion of the chip card (28) into the chip card actuating device (30, 34) and adds it up correspondingly and delivers a parking time corresponding to the added up units acoustically over the sound reproduction apparatus (32a, 38) and that after a predetermined number of insertion operations of the chip card (28) no further debits of a predetermined unit take place or that the chip card actuating device (30, 34) is locked for further insertion operations of the chip card (28).

2. A parking meter (100) according to claim 1,
**characterized in**
**that** the predetermined unit corresponds to a parking time of 30 minutes.

3. A parking meter (100) according to one of the claims 1 or 2,
**characterized in**
**that** the control device (32) is constituted in such a way that after actuation of an actuating means (18) it allocates a parking time preliminarly added up on the base of insertion operations of the chip card (28) to the parking space (14, 15) corresponding to this actuating means (18) and triggers the indicating device (20) allocated to this actuating means (18) time-controlled in accordance with the allocated parking time.

4. A parking meter (100) according to one of the claims 1 to 3,
**characterized in**
**that** a light diode (22, 24, 26) is provided for, whereby an intermittent flashing with a first predetermined frequency or with a first predetermined interval pattern indicates the first condition, an intermittent flashing with a second predetermined frequency or with a second predetermined interval pattern indicates the second condition and an intermittent flashing with a third predetermined frequency or a third predetermined interval pattern indicates the third condition.

5. A parking meter (100) according to claim 4,
**characterized in**
**that** one of the predetermined frequencies is infinite and corresponds to a continuous flashing.

6. A parking meter (100) according to one of the claims 1 to 5,
**characterized in**
**that** two light diodes (22, 24, 26) of different colours are provided for, a continuous flashing of the light diode with a first colour indicating the first condition, a continuous flashing of the other light diode with a second colour the second condition or the third condition and an intermittent flashing of one of the two light diodes with a predetermined frequency or with a predetermined interval pattern the third condition or the second condition.

7. A parking meter (100) according to one of the claims 1 to 5,
**characterized in**
**that** three light diodes (22, 24, 26) with different colours are provided for, a light diode (26) with green colour indicating the first condition, a light diode (24) with red colour the second condition and a light diode (22) with yellow colour the third condition.

8. A parking meter (100) according to any of the preceding claims 1 to 7,
**characterized in**
**that** the "predetermined time" of the third condition is one hour.

9. A parking meter (100) according to any of the preceding claims 1 to 8,
**characterized in**
**that** it shows a layout (12) of the parking spaces (14, 15) assigned to this parking meter (100), the actuating means (18) and indicating means (20) being arranged and/or marked in the layout in such a way that an actuating means and an indicating device are unequivocally allocated to each parking space of the layout.

10. A parking meter (100) according to claim 9,
**characterized in**
**that** a symbol, especially a numeral, is allocated to each parking space (14, 15) in the layout (12) on the parking meter (100), whereby the same symbol, especially the same numeral, is allocated to each actuating means (18) and each indicating device (20) as well as to the corresponding parking space (14, 15).

## Revendications

**1.** Parcmètre (100) avec un dispositif d'entrée (34) pour les moyens de paiement et au moins un dispositif indicateur (20) pour indiquer l'expiration d'une durée de parking payée, le dispositif indicateur (20) comprenant au moins un moyen d'indication optique respectivement pour un nombre correspondant de places de parking, un moyen d'actionnement (18) avec un moyen indicateur (20) étant respectivement alloué à une place de parking, tous les moyens indicateurs (20), les moyens d'actionnement (18) et le dispositif d'entrée (34) pour les moyens de paiement étant de plus reliés à un dispositif commun de commande (32), un appareil de reproduction du son (32a, 38) avec une annonce sonore sur la durée de parking payée étant de plus prévu et le dispositif d'entrée (34) pour les moyens de paiement étant formé, le moyen indicateur (20) alloué à chaque moyen d'actionnement (18) étant configuré de telle manière que celui-ci signalise deux états différents pouvant être lus ou reconnus par une personne de contrôle tels que "durée de parking payée en cours" (premier état) et "durée de parking expirée" (second état),
**caractérisé en ce**
**que** le moyen indicateur (20) alloué à chaque moyen d'actionnement (18) est de plus configuré de telle manière qu'un troisième état pouvant être lu par une personne de contrôle est représenté qui signalise à la personne de contrôle "durée de parking payée expirée depuis plus longtemps qu'une période de temps prédéterminée" et comprend au moins une diode électroluminescente (22, 24, 26) qui représente les trois états au moyen d'au moins deux couleurs lumineuses différentes, en particulier par trois couleurs lumineuses différentes et/ou par allumage intermittent différencié ou constant, que le dispositif d'entrée (34) pour les moyens de paiement est configuré comme un dispositif d'actionnement à carte à puce (30, 34) pour cartes à puces (28) comme cartes de parking avec un certain nombre d'unités de parking mémorisées pouvant être débitées pour la durée de parking respectivement souhaitée et que le dispositif de contrôle (32) est configuré de telle manière que celui-ci débite, à chaque insertion de la carte à puce (28) dans le dispositif d'actionnement à carte à puce (30, 34), une unité prédéterminée de la carte à puce (28) et l'additionne de manière correspondante et donne de manière sonore par l'appareil de reproduction du son (32a, 38) une durée de parking correspondante à l'une des unités additionnées et qu'après un nombre prédéterminé d'insertions de la carte à puce (28) aucun autre débit d'une unité prédéterminée n'a lieu ou que le dispositif d'actionnement à carte à puce (30, 34) est bloqué pour d'autres insertions de la carte à puce (28).

**2.** Parcmètre (100) selon la revendication 1,
**caractérisé en ce**
**que** l'unité prédéterminée correspond à une durée de parking de 30 minutes.

**3.** Parcmètre (100) selon l'une des revendications 1 ou 2,
**caractérisé en ce**
**que** le dispositif de commande (32) est configuré de telle manière qu'après l'actionnement d'un moyen d'actionnement (18) il alloue une durée de parking additionnée auparavant sur la base des insertions de la carte à puce (28) à l'emplacement de parking (14, 15) qui correspond à ce moyen d'actionnement (18) et excite le dispositif indicateur (20) alloué à ce moyen d'actionnement en fonction du temps en correspondance avec la durée de parking allouée.

**4.** Parcmètre (100) selon l'une des revendications 1 à 3,
**caractérisé en ce**
**qu'**une diode électroluminescente (22, 24, 26) est prévue, un allumage intermittent avec une première fréquence prédéterminée ou avec un premier modèle d'intervalle prédéterminé signalisant le premier état, un allumage intermittent avec une seconde fréquence prédéterminée ou avec un second modèle d'intervalle prédéterminé le second état et un allumage intermittent avec une troisième fréquence prédéterminée ou un troisième modèle d'intervalle prédéterminé le troisième état.

**5.** Parcmètre (100) selon la revendication 4,
**caractérisé en ce**
**qu'**une des fréquences prédéterminées est infinie et correspond à un allumage continu.

**6.** Parcmètre (100) selon l'une des revendications 1 à 5,
**caractérisé en ce**
**que** deux diodes électroluminescentes (22, 24, 26) de différente couleur sont prévues, un allumage continu de la diode électroluminescente avec une première couleur signalisant le premier état, un allumage continu de l'autre diode électroluminescente avec une seconde couleur le second état ou le troisième état et un allumage intermittent de l'une des deux diodes électroluminescentes avec une fréquence prédéterminée ou un modèle d'intervalle prédéterminé le troisième état ou le second état.

**7.** Parcmètre (100) selon l'une des revendications 1 à 5,
**caractérisé en ce**
**que** trois diodes électroluminescentes (22, 24, 26) de couleurs différentes sont prévues, une diode électroluminescente (26) de couleur verte signalisant le premier état, une diode électroluminescente (24) de couleur rouge le second état et une diode électroluminescente (22) de couleur jaune le troisième état.

**8.** Parcmètre (100) selon l'une des revendications précédentes 1 à 7,
**caractérisé en ce**
**que** la "durée prédéterminée" du troisième état est d'une heure.

**9.** Parcmètre (100) selon l'une des revendications précédentes 1 à 8,
**caractérisé en ce**
**que** celui-ci présente un plan d'ensemble (12) des places de parking (14, 15) allouées à ce parcmètre (100), les moyens d'actionnement (18) et dispositifs indicateurs (20) étant placés ou marqués sur le plan d'ensemble de manière qu'un moyen d'actionnement et un dispositif indicateur sont alloués de manière univoque à chaque place de parking du plan d'ensemble.

**10.** Parcmètre (100) selon la revendication 9,
**caractérisé en ce**
**qu'**un symbole, en particulier un chiffre, est alloué à chaque place de parking (14, 15) dans le plan d'ensemble (12) sur le parcmètre (100), le même symbole, en particulier le même chiffre, étant alloué à chaque moyen d'actionnement (18) et à chaque dispositif indicateur (20) ainsi qu'à la place de parking correspondante (14, 15).
